# EUROPÄISCHE PATENTANMELDUNG

(11) **EP 3 909 805 A1**
(43) Veröffentlichungstag der Anmeldung: **17.11.2021**
(21) Anmeldenummer: 21169585.3
(22) Anmeldetag: 21.04.2021
(51) Int. Cl.: B60L 53/16, B60L 53/30, H01R 13/60, H01R 13/44, H01R 13/443

(54) **VORRICHTUNG, INSBESONDERE LADESTATION ODER ELEKTROFAHRZEUG, UND BAUGRUPPE FÜR EINE SOLCHE VORRICHTUNG**

(30) Priorität: 13.05.2020 DE 202020002100 U
(71) Anmelder: BOB Holding GmbH, 97332 Volkach (DE)
(72) Erfinder: BECK, Bernhard, 97332 Volkach (DE)
(74) Vertreter: FDST Patentanwälte

(57) **Zusammenfassung**

Es wird eine Vorrichtung (2) angegeben, insbesondere eine Ladestation oder ein Elektrofahrzeug, mit einem Ladekabel (6), welches endseitig einen Ladestecker (8) aufweist, zur elektrischen Anbindung für einen Ladebetrieb, mit einer Steckeraufnahme (10), in welche der Ladestecker (8) in einer Steckrichtung (S) einführbar ist, zur Aufbewahrung des Ladesteckers (8), wobei die Steckeraufnahme (10) als eine Blindaufnahme für den Ladestecker (8) ausgebildet ist. Weiter wird eine Baugruppe (30) angegeben, welche eine Steckeraufnahme (10) und eine Verriegelung (28) für eine Vorrichtung (2) aufweist. Weiter wird ein Verfahren zum Betrieb einer solchen Vorrichtung (2) angegeben.

## Beschreibung

Die Erfindung betrifft eine Vorrichtung, insbesondere eine Ladestation oder ein Elektrofahrzeug, sowie eine Baugruppe für eine solche Vorrichtung

Ein Elektrofahrzeug weist zum Antrieb einen elektrischen Antriebsstrang mit zumindest einer E-Maschine auf sowie einen Elektrospeicher, auch als Batterie bezeichnet, zur elektrischen Versorgung des Antriebsstrangs. Der Elektrospeicher muss regelmäßig geladen werden, dies erfolgt typischerweise mittels einer Ladestation, welche an ein Stromnetz angeschlossen ist. Das Elektrofahrzeug und die Ladestation werden zum Laden über ein Ladekabel verbunden. Das Ladekabel wird entweder separat bereitgestellt oder ist mit der Ladestation oder dem Elektrofahrzeug verbunden.

Das Laden erfolgt in einem Ladebetrieb. Außerhalb des Ladebetriebs wird das Ladekabel an sich nicht benötigt, sodass sich die Anforderung einer Zwischenlagerung oder Unterbringung des Ladekabels ergibt.

Vor diesem Hintergrund ist es eine Aufgabe der Erfindung, eine verbesserte Vorrichtung mit einem Ladekabel anzugeben. Insbesondere soll die Zwischenlagerung oder Unterbringung eines Ladekabels verbessert werden.

Die Aufgabe wird erfindungsgemäß gelöst durch eine Vorrichtung mit den Merkmalen gemäß Anspruch 1 sowie durch eine Baugruppe mit den Merkmalen gemäß Anspruch 11. Vorteilhafte Ausgestaltungen, Weiterbildungen und Varianten sind Gegenstand der Unteransprüche. Die Aufgabe wird auch gelöst durch ein Verfahren mit den Merkmalen gemäß Anspruch 12. Die Ausführungen zur Vorrichtung gelten sinngemäß auch für die Baugruppe sowie das Verfahren und umgekehrt.

Die Vorrichtung ist vorzugsweise eine Ladestation für ein Elektrofahrzeug oder ein Elektrofahrzeug.

Unter einem Elektrofahrzeug wird vorzugsweise ein nicht-schienengebundenes Fahrzeug mit einem elektrischen Antriebsstrang verstanden, wobei der Antriebsstrang zumindest eine E-Maschine zum Antrieb des Fahrzeugs aufweist. Das Elektrofahrzeug ist z.B. ein PKW oder LKW. Das Elektrofahrzeug weist weiter einen Energiespeicher auf, zur Versorgung des Antriebsstrangs mit elektrischer Energie. Der Begriff "Elektrofahrzeug" umfasst auch Hybridfahrzeuge.

Eine Ladestation ist eine insbesondere ortsfeste, d.h. fest installierte Vorrichtung, zur Abgabe von elektrischer Energie. Die Ladestation ist typischerweise an ein Stromnetz angeschlossen. Die Ladestation ist beispielsweise als Ladesäule oder als sogenannte Wall-Box ausgebildet. Die Ladestation weist insbesondere ein Gehäuse auf, welches je nach Bedarf vorzugsweise mit Bedienelementen und/oder Anzeigeelementen zur Steuerung und/oder Überwachung eines Ladebetriebs ausgestattet ist. Mit einer einzelnen Ladestation ist zu einem gegebenen Zeitpunkt typischerweise lediglich ein einzelnes Elektrofahrzeug verbindbar.

Die Vorrichtung weist ein Ladekabel auf, welches endseitig einen Ladestecker aufweist, zur elektrischen Anbindung für einen Ladebetrieb. Ist die Vorrichtung eine Ladestation, dann wird das Ladekabel zum Laden über den Ladestecker mit einem Elektrofahrzeug verbunden, ist umgekehrt die Vorrichtung ein Elektrofahrzeug, dann wird zum Laden das Ladekabel über den Ladestecker mit einer Ladestation verbunden. Das Ladekabel ist vorzugsweise ein fester Bestandteil der Vorrichtung, also nicht ohne Weiteres abtrennbar. Nachfolgend wird ohne Beschränkung der Allgemeinheit davon ausgegangen, dass die Vorrichtung eine Ladestation ist, die Ausführungen gelten jedoch sinngemäß auch für den Fall, dass die Vorrichtung ein Elektrofahrzeug ist.

Die Vorrichtung weist weiterhin eine Steckeraufnahme auf, in welche der Ladestecker in einer Steckrichtung einführbar ist, zur Aufbewahrung des Ladesteckers. Die Steckeraufnahme wird insbesondere auch als Steckdose bezeichnet. Die Steckeraufnahme ist als eine Blindaufnahme für den Ladestecker ausgebildet, d.h. als sogenannter "Dummy". Die Steckeraufnahme und der Ladestecker tauschen demnach gerade keine elektrische Energie miteinander aus, vielmehr dient die Steckeraufnahme vorteilhaft vorrangig zur Unterbringung und Zwischenlagerung des Ladesteckers außerhalb eines Ladebetriebs, d.h. dann, wenn der Ladestecker nicht benötigt wird. Die Steckeraufnahme ist insbesondere nicht an ein Stromnetz oder einen Energiespeicher angeschlossen, sodass die Steckeraufnahme demnach nicht zur Leistungsübertragung ausgebildet ist.

Ein wesentlicher Vorteil der Erfindung besteht insbesondere darin, dass der Ladestecker in der Steckeraufnahme in definierter Weise und an einer definierten Stelle besonders sicher und geschützt verstaubar ist. Zugleich lassen sich vorteilhafte Betriebsmodi der Vorrichtung realisieren, indem diese zusätzlich mit einer Verriegelung versehen wird, welche den Ladestecker nur in bestimmten Fällen und somit auf kontrollierbare Weise für einen Ladebetrieb freigibt, wie weiter unten noch näher erläutert wird. Die Ausführung als Blindaufnahme ist dabei besonders kostengünstig und konstruktiv besonders einfach. Die Steckeraufnahme ist vorzugsweise in ein Gehäuse der Vorrichtung eingelassen, sodass die Steckeraufnahme sozusagen im Gehäuse eine Öffnung bildet, in welche hinein der Ladestecker versenkbar ist.

Die Steckeraufnahme ist vorzugsweise frei von elektrischen Kontakten für den Ladestecker. Die Steckeraufnahme ist demnach gerade nicht dazu ausgebildet, mit dem Ladekabel elektrische Energie auszutauschen, ganz im Gegensatz zu einer Ladebuchse, in welche der Ladestecker im Ladebetrieb eingesteckt wird. Im Falle einer Ladestation ist die Ladebuchse ein Teil des Elektrofahrzeugs und an dessen Elektrospeicher angeschlossen, typsicherweise über eine Ladeelektronik. Im Falle eines Elektrofahrzeugs ist die Ladebuchse ein Teil der Ladestation und dann üblicherweise mit einem Stromnetz verbunden. Die Steckeraufnahme ist hingegen insbesondere weder mit einem Elektrospeicher noch mit einem Stromnetz verbunden, sondern dient vorzugsweise lediglich der mechanischen Halterung des Ladesteckers.

Bevorzugterweise ist die Steckeraufnahme eine zweckmäßigerweise standardisierte Buchse, mit einer Steckkontur, welche komplementär ist zu einer Steckkontur des Ladesteckers, zur formschlüssigen Halterung, insbesondere Lagerung, des Ladesteckers in der Steckeraufnahme. Ganz besonders bevorzugt ist eine Ausgestaltung, bei welcher die Steckeraufnahme eine Ladebuchse ohne elektrische Kontakte ist. Auf diese Weise ist gewährleistet, dass der Ladestecker optimal gehalten wird. Auch sind das Einführen oder Herausnehmen des Ladesteckers aus der Steckeraufnahme dadurch ähnlich wie das Einstecken oder Ausstecken aus einer Ladebuchse, sodass die Handhabung für einen Nutzer weniger gewöhnungsbedürftig ist. Die genaue Ausgestaltung der Steckkonturen ist vorliegend zunächst von untergeordneter Bedeutung, wichtiger ist, dass die Steckkonturen komplementär zueinander sind, sodass eine sichere, formschlüssige Verbindung hergestellt ist, wenn der Ladestecker in die Steckeraufnahme eingesteckt ist.

Vorzugsweise ist der Ladestecker ein Stecker gemäß IEC 62196, z.B. vom Typ 2. Ein solcher Ladestecker weist typischerweise drei Phasen, einen Neutralleiter, eine Erdung und zwei Signalleitungen auf, d.h. insgesamt sieben Steckkontakte. Dabei sind üblicherweise sechs der Steckkontakte ringförmig um einen zentralen Steckkontakt angeordnet, welcher dann entlang einer Zentralachse verläuft. Die Steckeraufnahme ist entsprechend vorzugsweise derart ausgebildet, dass in diese ein solcher Ladestecker einsteckbar ist.

Da die Steckeraufnahme einen definierten Ort zur Unterbringung des Ladesteckers darstellt, speziell wenn dieser gerade nicht benötigt wird, eignet sich die Steckeraufnahme besonders zur Erkennung und/oder Definition eines Betriebszustands der Vorrichtung. In einer vorteilhaften Ausgestaltung weist insbesondere hierzu die Vorrichtung einen Präsenzsensor auf, welcher ausgebildet ist anzugeben, ob der Ladestecker in die Steckeraufnahme insbesondere vollständig eingeführt ist oder nicht. In ersterem Fall wird dann zweckmäßigerweise als Betriebszustand ein Ruhe- oder Bereitschaftsbetrieb erkannt, im zweiten Fall ein Nutzungs- oder sogar Ladebetrieb. Mit dem Präsenzsensor ist als eine erste Zusatzfunktion der Vorrichtung eine Überwachungsfunktion realisiert. Die Vorrichtung ist nun ausgebildet zu überwachen, ob der Ladestecker in der Steckeraufnahme eingesteckt ist oder nicht, die Vorrichtung erkennt demnach die Anwesenheit (d.h. Präsenz) des Ladesteckers in der Steckeraufnahme. Daraus lassen sich vorteilhaft diverse Schlussfolgerungen ziehen, alternativ oder zusätzlich lassen sich diverse Aktionen in Reaktion hierauf veranlassen. Beispielsweise wird beim Herausnehmen des Ladesteckers ein Ladebetrieb vorbereitet oder beim Einstecken des Ladesteckers ein Ladebetrieb beendet. Weiter beispielsweise wird ein Alarm ausgelöst, falls der Ladestecker über eine bestimmte Zeit hinaus weder in eine Ladebuchse noch in die Steckeraufnahme eingesteckt ist.

In einer geeigneten Ausgestaltung weist die Steckeraufnahme eine Anzahl von Vertiefungen auf, jeweils zur Aufnahme eines Steckkontakts des Ladesteckers. Unter "eine Anzahl von" wird allgemein "wenigstens ein" oder "ein oder mehrere" verstanden. Die Vertiefungen sind jeweils beispielsweise als Sacklöcher ausgebildet oder als Durchgangslöcher. In einer Querschnittebene senkrecht zur Steckrichtung sind die Vertiefungen vorzugsweise kreisrund, um ebenfalls kreisrunde Steckkontakte des Ladesteckers aufzunehmen. Die Vertiefungen sind beispielsweise durch kragenartige und insbesondere zylinder- oder rohrförmige Fortsätze gebildet, welche sich parallel zur Steckrichtung erstrecken und von einem Grund der Steckeraufnahme aus nach vorn oder umgekehrt als Versenkungen von einer Frontebene aus nach hinten. Insbesondere ist für jeden Steckkontakt des Ladesteckers genaue eine Vertiefung ausgebildet. Die Vertiefungen weisen jeweils eine Form auf, welche zweckmäßigerweise komplementär zu den Steckkontakten sind. Die Vertiefungen sind insbesondere ein Teil der Steckkontur der Steckeraufnahme.

Bevorzugterweise ist der Präsenzsensor in einer der Vertiefungen angeordnet. Damit ist vorteilhaft sichergestellt, dass der Präsenzsensor den Ladestecker genau dann erkennt, wenn dieser vollständig eingesteckt ist, d.h. insbesondere bis zu einem Anschlag in die Steckeraufnahme eingeführt ist. Insbesondere wird der Präsenzsensor somit beim Einstecken von einem der Steckkontakte des Ladesteckers ausgelöst, vorzugsweise genau dann, wenn der Ladestecker vollständig, d.h. in einer Endposition, eingesteckt ist.

Der Präsenzsensor ist beispielsweise als Näherungssensor oder Kontaktsensor ausgebildet. Beispielsweise ist der Präsenzsensor ein Magnetschalter, z.B. ein Reed-Sensor, ein optischer Sensor oder ein Kontaktsensor, z.B. ein Taster oder ein Kontaktpin, oder dergleichen.

Zweckmäßigerweise ist der Präsenzsensor entlang einer Zentralachse der Steckeraufnahme angeordnet. Die Zentralachse verläuft in Steckrichtung und mittig der Steckeraufnahme. Die Steckeraufnahme ist vorzugsweise spiegelsymmetrisch bezüglich einer Spiegelebene und die Zentralachse verläuft in der Spiegelebene. In einer geeigneten Ausgestaltung ist eine der oben genannten Vertiefungen mittig in der Steckeraufnahme ausgebildet und die Zentralachse verläuft mittig durch diese Vertiefung. Die mittige Anordnung des Präsenzsensors entlang der Zentralachse ist besonders vorteilhaft. Zweckmäßigerweise wird eine Buchse verwendet, welche rückseitig entlang der Zentralachse eine Öffnung zur Durchführung von Leitungen aufweisen, um entsprechende elektrische Kontakte innerhalb der Buchse anschließen zu können. Bei der vorliegenden Vorrichtung werden die elektrischen Kontakte jedoch weggelassen, sodass diese Öffnung vorteilhaft zur Unterbringung des Präsenzsensors genutzt wird. Auf diese Weise wird eine vorzugsweise standardisierte Buchse sozusagen zweckentfremdet als Blindaufnahme genutzt, ohne eine zusätzliche Öffnung für einen Präsenzsensor ausbilden zu müssen. Dadurch ist die Vorrichtung insgesamt besonders kostengünstig. Die Öffnung wird dann genutzt, um den Präsenzsensor darin einzusetzen und/oder um eine Sensorleitung zum Präsenzsensor, welcher in der Steckeraufnahme, z.B. an deren Grund, positioniert ist, aus der Steckeraufnahme herauszuführen.

Besonders bevorzugt ist eine Ausgestaltung, bei welcher die Vorrichtung eine Verriegelung aufweist, mittels welcher der Ladestecker in der Steckeraufnahme verriegelbar ist, um ein Herausnehmen des Ladesteckers zu verhindern. Dadurch ist als eine zweite Zusatzfunktion eine Verriegelungsfunktion realisiert. Die Verriegelungsfunktion ist grundsätzlich unabhängig von der Präsenzfunktion, eine Kombination beider Zusatzfunktionen miteinander ist aber vorteilhaft.

Die Kombination aus der Steckeraufnahme und der Verriegelung wird als Baugruppe bezeichnet. Die Baugruppe ist eine besonders kompakte und konstruktiv einfache Baugruppe zur sicheren und definierten Zwischenlagerung oder Unterbringung des Ladesteckers. Die Verriegelung ist zweckmäßigerweise mit der Steckeraufnahme verbunden, insbesondere an dieser befestigt, vorzugsweise seitlich.

Der Präsenzsensor ist, sofern vorhanden, vorzugsweise ebenfalls ein Teil der Baugruppe. Geeigneterweise ist der Präsenzsensor mit der Steckeraufnahme verbunden, insbesondere in diese eingesetzt und/oder an oder in dieser befestigt.

Ist die Verriegelung aktiviert, dann ist die Vorrichtung insgesamt verriegelt, genauer gesagt ist der Ladestecker in der Steckeraufnahme verriegelt und dadurch festgehalten, d.h. ein Herausnehmen wird verhindert. Dies ist beispielsweise sinnvoll in einer zweckmäßigen Ausgestaltung, in welcher lediglich ausgewählten Nutzer eine Nutzung der Vorrichtung gestattet werden soll. Eine Entriegelung ist dann an eine Berechtigungsprüfung gebunden und erfolgt nur dann, wenn eine entsprechende Berechtigung oder Autorisierung erfolgt ist.

In einer geeigneten Ausgestaltung wird mit aktivierter Verriegelung zunächst eine Berechtigung eines Nutzers geprüft, z.B. gibt der Nutzer ein Passwort ein oder ein Zahlungsmittel oder dergleichen. Liegt eine Berechtigung vor, dann wird die Verriegelung gelöst, d.h. der Ladestecker wird entriegelt und ist dann aus der Steckeraufnahme entnehmbar. Ein Herausnehmen wird vorzugsweise durch einen Präsenzsensor wie oben beschrieben erkannt, z.B. um einen Ladebetrieb vorzubereiten oder zu aktivieren. Umgekehrt wird beim Einführen des Ladesteckers in die Steckeraufnahme die Verriegelung zweckmäßigerweise automatisch aktiviert, sodass der Ladestecker nach erfolgtem Laden wieder gesichert ist. Bevorzugterweise wird das Einstecken mittels des oben beschriebenen Präsenzsensors erkannt und dann daraufhin die Verriegelung aktiviert, sodass der Ladestecker nach dem Einführen in die Steckeraufnahme automatisch festgehalten wird.

In einer bevorzugten Ausgestaltung weist die Verriegelung einen Aktuator auf und ein bewegliches Verriegelungselement. Der Aktuator ist vorzugsweise ein elektrischer Aktuator, beispielsweise auf Basis eines Elektromagneten, welcher elektrisch aktiviert und deaktiviert wird, um das Verriegelungselement zu bewegen. Das Verriegelungselement ist bevorzugterweise ein Bolzen, Zapfen oder Zylinder, mit einer Längsachse, entlang welcher das Verriegelungselement dann beweglich ist und mittels des Aktuators bewegt wird. Das Verriegelungselement ist mittels des Aktuators in den Ladestecker einfahrbar, zum Verriegeln, d.h. zum Festhalten des Ladesteckers, und aus dem Ladestecker ausfahrbar, zum Entriegeln, d.h. zum Freigeben des Ladesteckers. Entsprechend weist der Ladestecker eine Verriegelungskontur auf, welche mit dem eingefahrenen Verriegelungselement derart zusammenwirkt, dass ein Herausnehmen des Ladesteckers aus der Steckeraufnahme insbesondere in Steckrichtung verhindert wird. Beispielsweise weist der Ladestecker als eine Verriegelungskontur ein seitliches Loch auf, in welches das Verriegelungselement eingefahren wird. Alternativ ist als Verriegelungskontur auch eine einfache Kante geeignet, welche beim Einstecken an dem ausgefahrenen Verriegelungselement vorbeigeführt wird und dann bei eingefahrenem Verriegelungselement einen Anschlag nach Art einer Hinterschneidung bildet, an welchem sich das Verriegelungselement sozusagen verhakt. Besonders bevorzugt ist eine Ausgestaltung, bei welcher der Ladestecker einen Kragen aufweist, welcher um die Steckkontakte herum verläuft und in welchen ein Loch für das Verriegelungselement eingebracht ist. Das Loch ist beispielsweise rund oder rechteckig oder als Langloch ausgebildet, welches sich in Steckrichtung erstreckt.

Das Verriegelungselement ist vorzugsweise senkrecht zur Steckrichtung beweglich. Beim Verriegeln wird das Verriegelungselement insbesondere auf die Zentralachse der Steckeraufnahme zubewegt und beim Entriegeln von der Zentralachse fort. In einer geeigneten Ausgestaltung wird das Verriegelungselement beim Ver- und Entriegeln lediglich um wenige Millimeter, d.h. um weniger als 1 cm bewegt.

Bevorzugterweise ist der Aktuator außerhalb der Steckeraufnahme angeordnet. Die Steckeraufnahme weist eine Wandung auf, welche einen Aufnahmeraum für den Ladestecker umläuft. In eingestecktem Zustand ruht der Ladestecker im Aufnahmeraum, der Aktuator ist dann auf einer diesbezüglich gegenüberliegenden Seite der Wandung angeordnet und somit außerhalb der Steckeraufnahme. Die Wandung weist nun zweckmäßigerweise einen Durchbruch auf, durch welchen das Verriegelungselement zum Verriegeln und zum Entriegeln hindurchführbar ist. Ein Ver- und Entriegeln erfolgt also sozusagen von außen heraus, indem das Verriegelungselement durch die Wandung hindurchgefahren wird. Dadurch ist die Gestaltung des Aktuators vorteilhaft unabhängig von jeglichen möglichen Bauraumbeschränkungen innerhalb der Steckeraufnahme.

Vorzugsweise ist die Wandung derart ausgebildet, dass diese in einer Querschnittebene senkrecht zur Steckrichtung einen kreissegmentförmigen Querschnitt aufweist. Mit anderen Worten: die Steckeraufnahme ist kreissegmentförmig ausgebildet und weist eine Flachseite auf und ist ansonsten kreisrund. Diese Ausgestaltung eignet sich besonders zur platzsparenden Anordnung der nötigen Steckkontakte des Ladesteckers und der Vertiefungen der Steckeraufnahme und gewährleistet vorteilhaft auch eine Verpolungssicherheit. Die Flachseite ist ein Teil der Wandung der Steckeraufnahme. Vorzugsweise ist nun der oben beschriebene Durchbruch für das Verriegelungselement auf der Flachseite angeordnet. Daraus ergibt sich speziell ein konstruktiver Vorteil derart, dass der Aktuator an der Flachseite besonders einfach montierbar ist. Zur Montage des Aktuators weist die Steckeraufnahme in einer geeigneten Ausgestaltung zwei parallele Montageschienen auf, welche in Steckrichtung verlaufen und vorzugsweise die Flachseite beranden. Der Aktuator wird dann bei der Montage auf die Flachseite der Steckeraufnahme beispielsweise aufgeschoben oder aufgesetzt und dann vorzugsweise zusätzlich befestigt.

Bei einem vorteilhaften Verfahren zum Betrieb einer Vorrichtung wie vorstehend beschrieben wird der Ladestecker in der Steckeraufnahme verriegelt und dadurch festgehalten, falls der Ladestecker in die Steckeraufnahme eingeführt ist oder wird.

Vorzugsweise wird der Ladestecker entriegelt, falls das Vorliegen einer Berechtigung zum Herausnehmen des Ladesteckers aus der Steckeraufnahme erkannt wird. Zweckmäßigerweise erfolgt hierzu im Rahmen einer Berechtigungsprüfung eine Authentifizierung, d.h. Autorisierung, eines Nutzers der Vorrichtung. Bei der Authentifizierung wird eine Eingabe oder Identifikation des Nutzers entgegengenommen und geprüft. Liegt eine Berechtigung vor, ist die Prüfung positiv. Falls eine Berechtigung erkannt wird, wird der Ladestecker zweckmäßigerweise freigegeben, indem dieser entriegelt wird. Dadurch ist der Ladestecker für einen berechtigen Nutzer nach erfolgreicher Authentifizierung aus der Steckeraufnahme herausnehmbar und zum Laden in einem Ladebetrieb verwendbar, andernfalls bleibt die Vorrichtung verriegelt, d.h. gesperrt. Der Nutzer kann den Ladestecker nun in eine Ladebuchse einstecken und einen elektrischen Kontakt zum Laden herstellen. Zweckmäßigerweise ist die Vorrichtung ausgebildet, einen elektrischen Kontakt des Ladesteckers mit einer Ladebuchse zu erkennen und daraufhin einen Ladestrom zum Laden zu aktivieren. Nach Beendigung des Ladens wird der Ladebetrieb beendet und der Ladestecker aus der Ladebuchse ausgesteckt. Zweckmäßigerweise ist die Vorrichtung ausgebildet, ein Abstecken des Ladesteckers aus der Ladebuchse und/oder ein Ende des Ladens zu erkennen. Nach dem Abstecken aus der Ladebuchse wird der Ladestecker vom Nutzer dann in die Steckeraufnahme eingesteckt. Dies wird vorzugsweise wie beschrieben von der Vorrichtung erkannt, z.B. über den Präsenzsensor. Daraufhin wird der Ladestecker in der Steckeraufnahme verriegelt und der Ladebetrieb wird vollständig beendet. Zweckmäßigerweise misst die Vorrichtung die vom Nutzer zum Laden entnommene Menge an elektrischer Energie, insbesondere um dies dann an eine Abrechnungseinheit zu übersenden, z.B. ein Abrechnungsportal, über welches der Nutzer das Laden bezahlen kann.

Weitere vorteilhafte Ausgestaltungen des Verfahrens ergeben sich aus den bisherigen Ausführungen.

Vorzugsweise weist die Vorrichtung eine Steuereinheit auf, welche ausgebildet ist, einen oder mehrere der beschriebenen Verfahrensschritte auszuführen. Die Steuereinheit ist beispielsweise eine programmierbare Schaltung oder ein Mikrocontroller oder dergleichen.

Nachfolgend werden Ausführungsbeispiele der Erfindung anhand einer Zeichnung näher erläutert. Darin zeigen jeweils schematisch:
- Fig. 1: eine Vorrichtung in einer ersten Ansicht,
- Fig. 2: die Vorrichtung aus Fig. 1 in einer anderen Ansicht,
- Fig. 3: eine Steckeraufnahme der Vorrichtung aus Fig. 1 in einer ersten Ansicht,
- Fig. 4: die Steckeraufnahme aus Fig. 3 in einer anderen Ansicht,
- Fig. 5: einen Ladestecker der Vorrichtung aus Fig. 1,
- Fig. 6: eine Baugruppe der Vorrichtung aus Fig. 1 in einer ersten Ansicht,
- Fig. 7: die Baugruppe aus Fig. 6 in einer Schnittansicht,
- Fig. 8: die Baugruppe aus Fig. 6 mit dem Ladestecker aus Fig. 5 in einer Schnittansicht.

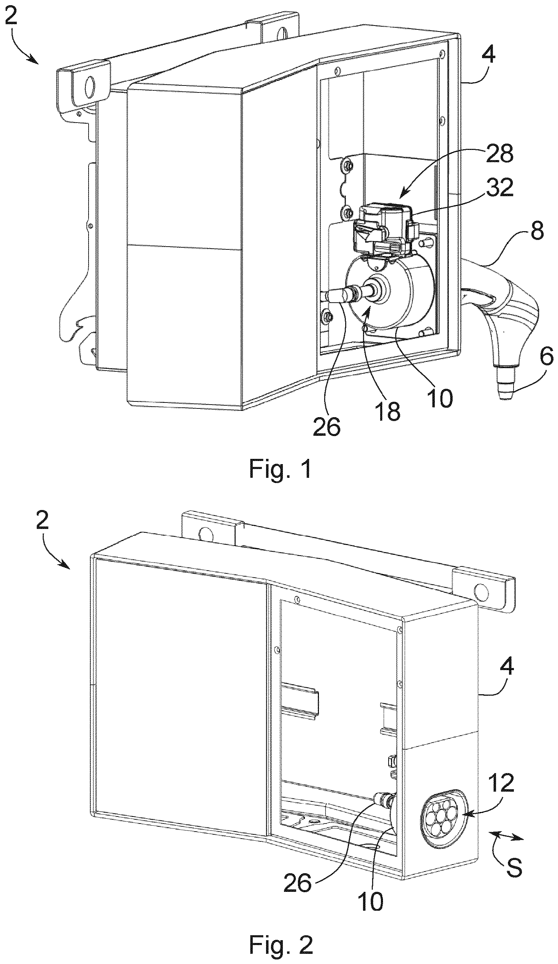

In Fig. 1 ist ein Ausführungsbeispiel einer erfindungsgemäßen Vorrichtung 2 gezeigt. Die hier gezeigte Vorrichtung 2 ist eine Ladestation für ein nicht explizit gezeigtes Elektrofahrzeug. In einer nicht gezeigten Variante ist die Vorrichtung 2 ein Elektrofahrzeug. Die gezeigte Ladestation ist eine ortsfeste, d.h. fest installierte Vorrichtung 2, zur Abgabe von elektrischer Energie, und hierzu an ein Stromnetz angeschlossen. Die Ladestation ist beispielsweise als Ladesäule oder als sogenannte Wall-Box ausgebildet. Die Ladestation weist ein Gehäuse 4 auf, welches je nach Bedarf mit Bedienelementen und/oder Anzeigeelementen zur Steuerung und/oder Überwachung eines Ladebetriebs ausstattbar ist. Mit der gezeigten Ladestation ist zu einem gegebenen Zeitpunkt lediglich ein einzelnes Elektrofahrzeug verbindbar.

Die Vorrichtung 2 weist ein Ladekabel 6 auf, welches endseitig einen Ladestecker 8 aufweist, zur elektrischen Anbindung für einen Ladebetrieb. Bei der gezeigten Vorrichtung 2 wird das Ladekabel 6 zum Laden über den Ladestecker 8 mit einem Elektrofahrzeug verbunden. Umgekehrt wird für den Fall, dass die Vorrichtung 2 ein Elektrofahrzeug ist, zum Laden das Ladekabel 6 über den Ladestecker 8 mit einer Ladestation verbunden. Das Ladekabel 6 ist hier ein fester Bestandteil der Vorrichtung 2. Nachfolgend wird ohne Beschränkung der Allgemeinheit davon ausgegangen, dass die Vorrichtung 2 eine Ladestation ist, die Ausführungen gelten jedoch auch für den Fall, dass die Vorrichtung 2 ein Elektrofahrzeug ist, sowie für andere Ausgestaltungen der Ladestation abseits der explizit gezeigten.

Die Vorrichtung 2 weist eine Steckeraufnahme 10 auf, in welche der Ladestecker 8 in einer Steckrichtung S einführbar ist, zur Aufbewahrung des Ladesteckers 8. Die Steckeraufnahme 10 wird auch als Steckdose bezeichnet und ist als eine Blindaufnahme für den Ladestecker 8 ausgebildet. Die Steckeraufnahme 10 und der Ladestecker 8 tauschen demnach gerade keine elektrische Energie miteinander aus, vielmehr dient die Steckeraufnahme 10 vorrangig zur Unterbringung und Zwischenlagerung des Ladesteckers 8 außerhalb eines Ladebetriebs, d.h. dann, wenn der Ladestecker 8 nicht benötigt wird. Der Ladestecker 8 ist in der Steckeraufnahme 10 in definierter Weise und an einer definierten Stelle sicher und geschützt verstaubar. Die Steckeraufnahme 10 ist in das Gehäuse 4 der Vorrichtung 2 eingelassen, sodass die Steckeraufnahme 10 sozusagen im Gehäuse 4 eine Öffnung bildet, in welche der Ladestecker 8 versenkbar ist. Dies ist speziell in Fig. 2 erkennbar, welche die Vorrichtung 2 aus Fig. 1 in einer anderen perspektivischen Ansicht und ohne den Ladestecker 8 und das Ladekabel 6 zeigt. Weiter ist in den Fig. 1 und 2 ein Teil des Gehäuses 4 ausgelassen, sodass dessen Innenraum einsehbar ist.

Die Steckeraufnahme 10 ist frei von elektrischen Kontakten für den Ladestecker 8 und ist demnach gerade nicht dazu ausgebildet, mit dem Ladekabel 6 elektrische Energie auszutauschen, ganz im Gegensatz zu einer Ladebuchse, in welche der Ladestecker 8 im Ladebetrieb eingesteckt wird. Die Steckeraufnahme 10 ist weder mit einem Elektrospeicher noch mit einem Stromnetz verbunden, sondern dient der mechanischen Halterung des Ladesteckers 8.

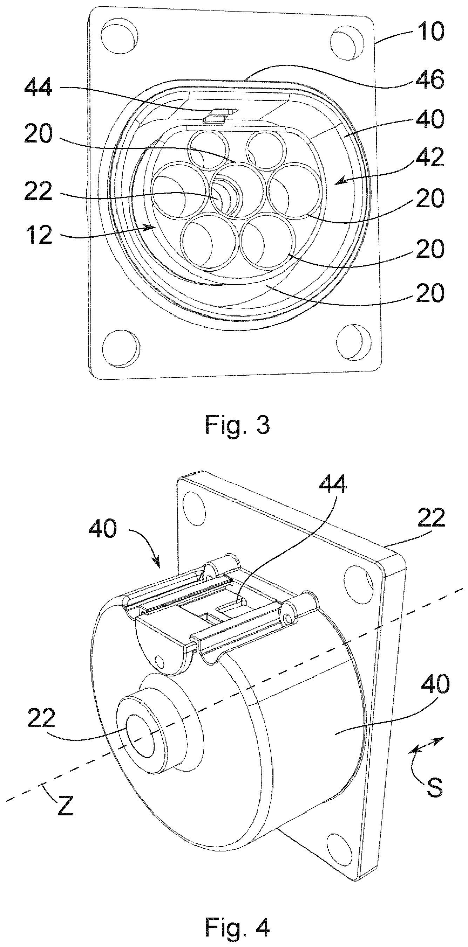

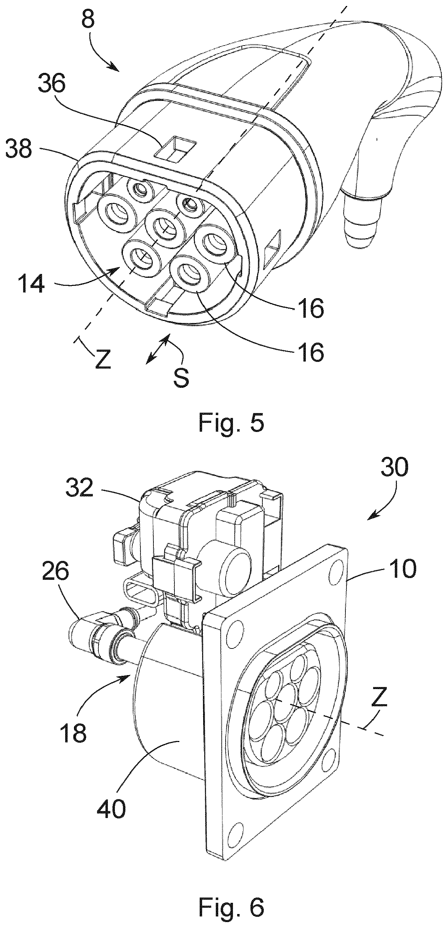

Die Steckeraufnahme 10 ist in den Fig. 3 und 4 in zwei unterschiedlichen, perspektivischen Ansichten gezeigt, in Fig. 3 überwiegend von vorn, in Fig. 4 dagegen überwiegend von hinten. Die Steckeraufnahme 10 ist eine Buchse, mit einer Steckkontur 12, welche komplementär ist zu einer Steckkontur 14 des Ladesteckers 8, zur formschlüssigen Lagerung des Ladesteckers 8 in der Steckeraufnahme 10. Die Steckkontur 14 des Ladesteckers 8 ist in Fig. 5 erkennbar, welche den Ladestecker 8 in einer perspektivischen Ansicht von schräg-vorn zeigt. Die Steckeraufnahme 10 ist vorliegend eine Ladebuchse ohne elektrische Kontakte, sodass gewährleistet ist, dass der Ladestecker 8 optimal gehalten wird. Das Einführen oder Herausnehmen des Ladesteckers 8 aus der Steckeraufnahme 10 ist ähnlich.

Der in den Figuren gezeigte Ladestecker 8 ist ein Stecker vom Typ 2 gemäß IEC 62196. Ein solcher Ladestecker 8 weist drei Phasen, einen Neutralleiter, eine Erdung und zwei Signalleitungen auf, d.h. insgesamt sieben Steckkontakte 16. Dabei sind sechs der Steckkontakte 16 ringförmig um einen zentralen Steckkontakt 16 angeordnet, welcher dann entlang einer Zentralachse Z verläuft. Die Steckeraufnahme 10 ist entsprechend derart ausgebildet, dass in diese ein solcher Ladestecker 8 einsteckbar ist. Der gezeigte Ladestecker 8 ist allerdings lediglich beispielhaft, die hier beschriebenen Konzepte sind auch auf andere Ladestecker 8 anwendbar.

Da die Steckeraufnahme 10 einen definierten Ort zur Unterbringung des Ladesteckers 8 darstellt, speziell wenn dieser gerade nicht benötigt wird, eignet sich die Steckeraufnahme 10 zur Erkennung und/oder Definition eines Betriebszustands der Vorrichtung 2. Hierzu weist die gezeigte die Vorrichtung 2 einen Präsenzsensor 18 auf, welcher ausgebildet ist anzugeben, ob der Ladestecker 8 in die Steckeraufnahme 10 vollständig eingeführt ist oder nicht. Damit ist als eine erste Zusatzfunktion der Vorrichtung 2 eine Überwachungsfunktion realisiert.

In der gezeigten Ausgestaltung weist die Steckeraufnahme 10 eine Anzahl von hier sieben Vertiefungen 20 auf, jeweils zur Aufnahme eines Steckkontakts 16 des Ladesteckers 8. Die Vertiefungen 20 sind jeweils als Sacklöcher oder Durchgangslöscher ausgebildet. In einer Querschnittebene senkrecht zur Steckrichtung S sind die Vertiefungen 20 kreisrund, wie auch aus Fig. 3 erkennbar ist, um die ebenfalls kreisrunden Steckkontakte 16 des Ladesteckers 8 aufzunehmen. Die Vertiefungen 20 sind hier Versenkungen von einer Frontebene der Steckeraufnahme 10 aus nach hinten.

Der Präsenzsensor 18 ist speziell in den Fig. 1, 3 und 6 - 8 erkennbar. Daraus wird deutlich, dass der Präsenzsensor 18 in einer der Vertiefungen 20 angeordnet ist. Damit ist vorteilhaft, dass der Präsenzsensor 18 den Ladestecker 8 genau dann erkennt, wenn dieser vollständig eingesteckt ist. Der Präsenzsensor 18 ist beispielsweise als Näherungssensor oder als Kontaktsensor ausgebildet.

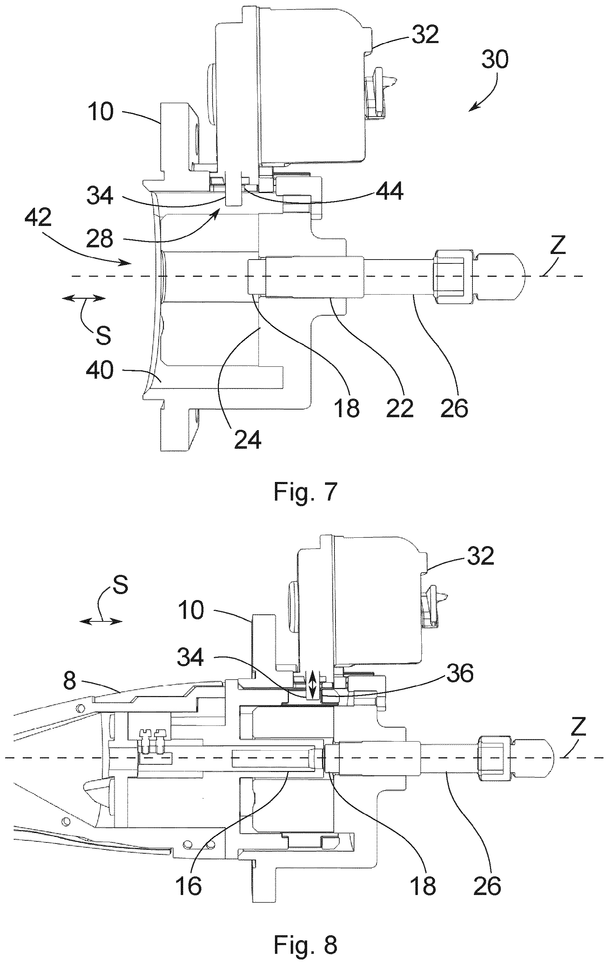

Der Präsenzsensor 18 ist entlang einer Zentralachse Z der Steckeraufnahme 10 angeordnet, welche dieselbe ist wie die Zentralachse Z des Ladesteckers 8. Die Zentralachse Z verläuft in Steckrichtung S und mittig der Steckeraufnahme 10. Die Steckeraufnahme 10 ist zudem spiegelsymmetrisch bezüglich einer Spiegelebene und die Zentralachse Z verläuft in der Spiegelebene. Die Spiegelebene entspricht vorliegend insbesondere der Zeichenebene der Fig. 7 und 8. Eine der Vertiefungen 20 ist mittig in der Steckeraufnahme 10 ausgebildet und die Zentralachse Z verläuft mittig durch diese Vertiefung 20. Rückseitig entlang der Zentralachse Z weist die Steckeraufnahme 10 eine Öffnung 22 auf, welche hier zur Unterbringung des Präsenzsensors 18 genutzt wird. Genauer gesagt wird die Öffnung 22 hier genutzt, um den Präsenzsensor 18 am Grund 24 der Steckeraufnahme 10 zu positionieren und eine Sensorleitung 26 zum Präsenzsensor 18 aus der Steckeraufnahme 10 herauszuführen. Dies ist besonders deutlich erkennbar in der Schnittdarstellung der Fig. 7.

Die hier gezeigte Vorrichtung 2 weist außerdem eine Verriegelung 28 auf, mittels welcher der Ladestecker 8 in der Steckeraufnahme 10 verriegelbar ist, um ein Herausnehmen des Ladesteckers 8 zu verhindern. Dadurch ist als eine zweite Zusatzfunktion eine Verriegelungsfunktion realisiert. Die Verriegelungsfunktion ist grundsätzlich unabhängig von der Präsenzfunktion, vorliegend sind aber beide Zusatzfunktionen miteinander kombiniert.

Die Kombination aus der Steckeraufnahme 10 und der Verriegelung 28 wird als Baugruppe 30 bezeichnet. Die Baugruppe 30 ist in den Fig. 6 und 7 näher gezeigt, in Fig. 6 in einer perspektivischen Ansicht und in Fig. 7 in einer Schnittansicht entlang der Zentralachse Z. Der Präsenzsensor 18 und die Sensorleitung 26 sind hier ebenfalls Teile der Baugruppe 30. Die Verriegelung 22 ist mit der Steckeraufnahme 10 verbunden und an dieser seitlich befestigt. In Fig. 8 ist die Baugruppe 30 in der Schnittansicht der Fig. 7 gezeigt, jedoch zusätzlich mit dem eingesteckten Ladestecker 8.

Ist die Verriegelung 28 wie in Fig. 8 gezeigt aktiviert, dann ist die Vorrichtung 2 insgesamt verriegelt, genauer gesagt ist der Ladestecker 8 in der Steckeraufnahme 10 verriegelt und dadurch festgehalten, d.h. ein Herausnehmen wird verhindert. Eine Entriegelung ist vorliegend an eine Berechtigungsprüfung gebunden und erfolgt nur dann, wenn eine entsprechende Berechtigung oder Autorisierung erfolgt ist.

Die hier gezeigte Verriegelung 28 weist einen Aktuator 32 auf und ein bewegliches Verriegelungselement 34. Der Aktuator 32 ist ein elektrischer Aktuator 32, beispielsweise auf Basis eines Elektromagneten, welcher elektrisch aktiviert und deaktiviert wird, um das Verriegelungselement 34 zu bewegen. Das Verriegelungselement 34 ist ein Bolzen, Zapfen oder Zylinder, mit einer Längsachse, entlang welcher das Verriegelungselement 34 beweglich ist. Das Verriegelungselement 34 ist mittels des Aktuators 32 wie in Fig. 8 gezeigt in den Ladestecker 8 einfahrbar, zum Verriegeln desselben, und ausfahrbar, zum Entriegeln. Entsprechend weist der Ladestecker 8 eine Verriegelungskontur 36 auf, welche mit dem eingefahrenen Verriegelungselement 34 derart zusammenwirkt, dass ein Herausnehmen des Ladesteckers 8 aus der Steckeraufnahme 10 in Steckrichtung S verhindert wird. Im hier gezeigten Ausführungsbeispiel weist der Ladestecker 8, wie in Fig. 5 erkennbar ist, als Verriegelungskontur 36 ein seitliches Loch auf, in welches das Verriegelungselement 34 eingefahren wird. Alternativ ist auch eine einfache Kante als Verriegelungskontur 36 geeignet, welche beim Einstecken an dem ausgefahrenen Verriegelungselement 34 vorbeigeführt wird und dann bei eingefahrenem Verriegelungselement 34 einen Anschlag nach Art einer Hinterschneidung bildet, an welchem sich das Verriegelungselement 34 verhakt. Vorliegend weist der Ladestecker 8 einen Kragen 38 auf, welcher um die Steckkontakte 16 herum verläuft und in welchen das Loch für das Verriegelungselement 34 eingebracht ist.

Das Verriegelungselement 34 ist hier senkrecht zur Steckrichtung S beweglich, speziell in der Zeichenebene der Fig. 7 und 8 von oben nach unten zum Verriegeln und umgekehrt von unten nach oben zum Entriegeln. Beim Verriegeln wird das Verriegelungselement 34 auf die Zentralachse Z der Steckeraufnahme 10 zubewegt und beim Entriegeln von der Zentralachse Z fort. Dies ist in Fig. 8 durch einen Doppelpfeil am Verriegelungselement 34 angedeutet.

Der Aktuator 32 ist im gezeigten Ausführungsbeispiel außerhalb der Steckeraufnahme 10 angeordnet. Die Steckeraufnahme 10 weist eine Wandung 40 auf, welche einen Aufnahmeraum 42 für den Ladestecker 8 umläuft. In eingestecktem Zustand ruht der Ladestecker 8 im Aufnahmeraum 42, der Aktuator 32 ist dann auf einer diesbezüglich gegenüberliegenden Seite der Wandung 40 angeordnet und somit außerhalb der Steckeraufnahme 10. Die Wandung 40 weist einen Durchbruch 44 auf, durch welchen das Verriegelungselement 34 zum Verriegeln und zum Entriegeln hindurchführbar ist. Ein Ver- und Entriegeln erfolgt also von außen heraus, indem das Verriegelungselement 34 durch die Wandung 40 hindurchgefahren wird.

Die Wandung 40 ist hier derart ausgebildet, dass diese in einer Querschnittebene senkrecht zur Steckrichtung S einen kreissegmentförmigen Querschnitt aufweist, wie auch aus den Fig. 2-4 und 6 deutlich wird. Die Steckeraufnahme 10 ist kreissegmentförmig ausgebildet und weist eine Flachseite 46, ist aber ansonsten kreisrund. Dadurch ist die Steckeraufnahme 10 verpolungssicher ausgebildet. Die Flachseite 46 ist ein Teil der Wandung 40. Der Durchbruch 44 für das Verriegelungselement 34 ist auf der Flachseite 46 angeordnet und auch der Aktuator 32 ist dann an der Flachseite 46 montiert. Hierzu weist die gezeigte Steckeraufnahme 10 zwei in Fig. 4 erkennbare, aber nicht explizit bezeichnete, parallele Montageschienen auf, welche in Steckrichtung S verlaufen und die Flachseite 46 beranden.

Bei einem Verfahren zum Betrieb der Vorrichtung 2 wird der Ladestecker 8 in der Steckeraufnahme 10 verriegelt und dadurch festgehalten, falls der Ladestecker 8 in die Steckeraufnahme 10 eingeführt ist oder wird. Der Ladestecker 8 wird dagegen entriegelt, falls das Vorliegen einer Berechtigung zum Herausnehmen des Ladesteckers 8 aus der Steckeraufnahme 10 erkannt wird. Beispielsweise erfolgt hierzu eine Authentifizierung eines Nutzers der Vorrichtung 2, wobei eine Eingabe oder Identifikation des Nutzers entgegengenommen und geprüft wird. Falls eine Berechtigung erkannt wird, wird der Ladestecker 8 freigegeben, indem dieser entriegelt wird, wodurch der Ladestecker 8 aus der Steckeraufnahme 10 herausnehmbar und zum Laden in einem Ladebetrieb verwendbar ist. Andernfalls bleibt die Vorrichtung 2 verriegelt, d.h. gesperrt. Der Nutzer kann den Ladestecker 8 nun in eine Ladebuchse einstecken und einen elektrischen Kontakt zum Laden herstellen. Beispielsweise ist die Vorrichtung 2 dann weiter ausgebildet, einen elektrischen Kontakt des Ladesteckers 8 mit der Ladebuchse zu erkennen und daraufhin einen Ladestrom zum Laden zu aktivieren. Nach Beendigung des Ladens wird der Ladebetrieb beendet und der Ladestecker 8 vom Nutzer aus der Ladebuchse ausgesteckt. Beispielsweise ist die Vorrichtung dann auch ausgebildet, ein Abstecken des Ladesteckers 8 aus der Ladebuchse und/oder ein Ende des Ladens zu erkennen. Nach dem Abstecken aus der Ladebuchse wird der Ladestecker 8 vom Nutzer dann in die Steckeraufnahme 10 eingesteckt. Dies wird von der Vorrichtung 2 erkannt, hier über den Präsenzsensor 18. Daraufhin wird der Ladestecker 8 in der Steckeraufnahme 10 verriegelt und der Ladebetrieb wird vollständig beendet. In einer möglichen Ausgestaltung misst die Vorrichtung 2 auch die vom Nutzer zum Laden entnommene Menge an elektrischer Energie und übersendet diese an eine Abrechnungseinheit, über welche der Nutzer das Laden bezahlen kann. In einer Ausgestaltung weist die Vorrichtung 2 eine nicht explizit gezeigte Steuereinheit auf, welche ausgebildet ist, einen oder mehrere der beschriebenen Verfahrensschritte auszuführen.

### Bezugszeichenliste

- 2: Vorrichtung
- 4: Gehäuse
- 6: Ladekabel
- 8: Ladestecker
- 10: Steckeraufnahme
- 12: Steckkontur (der Steckeraufnahme)
- 14: Steckkontur (des Ladesteckers)
- 16: Steckkontakt
- 18: Präsenzsensor
- 20: Vertiefung
- 22: Öffnung
- 24: Grund (der Steckeraufnahme)
- 26: Sensorleitung
- 28: Verriegelung
- 30: Baugruppe
- 32: Aktuator
- 34: Verriegelungselement
- 36: Verriegelungskontur
- 38: Kragen
- 40: Wandung (der Steckeraufnahme)
- 42: Aufnahmeraum
- 44: Durchbruch
- 46: Flachseite
- S: Steckrichtung
- Z: Zentralachse

## Patentansprüche

1. Vorrichtung (2), insbesondere Ladestation oder Elektrofahrzeug,
- mit einem Ladekabel (6), welches endseitig einen Ladestecker (8) aufweist, zur elektrischen Anbindung für einen Ladebetrieb,
- mit einer Steckeraufnahme (10), in welche der Ladestecker (8) in einer Steckrichtung (S) einführbar ist, zur Aufbewahrung des Ladesteckers (8),
- wobei die Steckeraufnahme (10) als eine Blindaufnahme für den Ladestecker (8) ausgebildet ist.

2. Vorrichtung (2) nach Anspruch 1,
wobei die Steckeraufnahme (10) frei ist von elektrischen Kontakten für den Ladestecker (8).

3. Vorrichtung (2) nach Anspruch 1 oder 2,
wobei die Steckeraufnahme (10) eine Buchse ist, mit einer Steckkontur (12), welche komplementär ist zu einer Steckkontur (14) des Ladesteckers (8), zur formschlüssigen Halterung des Ladesteckers (8) in der Steckeraufnahme (10).

4. Vorrichtung (2) nach einem der Ansprüche 1 bis 3,
wobei diese einen Präsenzsensor (18) aufweist, welcher ausgebildet ist anzugeben, ob der Ladestecker (8) in die Steckeraufnahme (10) eingeführt ist oder nicht.

5. Vorrichtung (2) nach Anspruch 4,
wobei die Steckeraufnahme (10) eine Anzahl von Vertiefungen (20) aufweist, jeweils zur Aufnahme eines Steckkontakts (16) des Ladesteckers (8),
wobei der Präsenzsensor (18) in einer der Vertiefungen (20) angeordnet ist.

6. Vorrichtung (2) nach Anspruch 4 oder 5,
wobei der Präsenzsensor (18) entlang einer Zentralachse (Z) der Steckeraufnahme (10) angeordnet ist.

7. Vorrichtung (2) nach einem der Ansprüche 1 bis 6,
wobei diese eine Verriegelung (28) aufweist, mittels welcher der Ladestecker (8) in der Steckeraufnahme (10) verriegelbar ist, um ein Herausnehmen des Ladesteckers (8) zu verhindern.

8. Vorrichtung (2) nach Anspruch 7,
wobei die Verriegelung (28) einen Aktuator (32) aufweist und ein bewegliches Verriegelungselement (34),
wobei das Verriegelungselement (34) mittels des Aktuators (32) in den Ladestecker (8) einfahrbar ist, zum Verriegeln, und aus dem Ladestecker (8) ausfahrbar ist, zum Entriegeln.

9. Vorrichtung (2) nach Anspruch 7 oder 8,
wobei das Verriegelungselement (34) senkrecht zur Steckrichtung (S) beweglich ist.

10. Vorrichtung (2) nach einem der Ansprüche 7 bis 9,
wobei der Aktuator (32) außerhalb der Steckeraufnahme (10) angeordnet ist,
wobei die Steckeraufnahme (10) eine Wandung (40) aufweist, welche einen Aufnahmeraum (42) für den Ladestecker (8) umläuft und welche einen Durchbruch (44) aufweist, durch welchen das Verriegelungselement (34) zum Verriegeln und zum Entriegeln hindurchführbar ist.

11. Baugruppe (30), welche eine Steckeraufnahme (10) und eine Verriegelung (28) für eine Vorrichtung (2) gemäß einem der Ansprüche 7 bis 10 aufweist.

12. Verfahren zum Betrieb einer Vorrichtung (2) gemäß einem der Ansprüche 1 bis 10, wobei der Ladestecker (8) in der Steckeraufnahme (10) verriegelt wird und dadurch festgehalten wird, falls der Ladestecker (8) in die Steckeraufnahme (10) eingeführt ist oder wird.
